# EUROPÄISCHE PATENTSCHRIFT

(11) **EP 2 656 432 B1**
(45) Veröffentlichungstag und Bekanntmachung des Hinweises auf die Patenterteilung: **26.04.2017**
(21) Anmeldenummer: 12709815.0
(22) Anmeldetag: 15.02.2012
(51) Int. Cl.: H01M 12/08, H01M 4/04, H01M 4/62, H01M 4/38, H01M 4/52, H01M 4/76

(54) **ENERGIESPEICHERMATERIAL UND WIEDERAUFLADBARE ENERGIESPEICHEREINHEIT**
ENERGY STORAGE MATERIAL AND RECHARGEABLE ENERGY STORAGE UNIT
MATÉRIAU POUR ACCUMULER D'ÉNERGIE ET UNITÉ D'ACCUMULATION D'ÉNERGIE RECHARGEABLE

(30) Priorität: 16.02.2011 DE 102011004183
(43) Veröffentlichungstag der Anmeldung: 30.10.2013
(60) Teilanmeldung: 16002051.7
(73) Patentinhaber: Siemens Aktiengesellschaft, 80333 München (DE)
(72) Erfinder: BECKER, Ines, 90408 Nürnberg (DE); PURUCKER, Thomas, 91093 Heßdorf (DE)
(86) Internationale Anmeldenummer: PCT/EP2012/052591
(87) Internationale Veröffentlichungsnummer: WO 2012/110558

(56) Entgegenhaltungen:
- EP-A1- 0 709 907
- EP-A2- 0 855 752
- WO-A1-2006/111835
- WO-A1-2010/118442
- US-A- 3 819 413
- US-A1- 2002 160 247
- HANG B T ET AL: "The electrochemical properties of Fe2O3-loaded carbon electrodes for iron-air battery anodes", JOURNAL OF POWER SOURCES, ELSEVIER SA, CH, vol. 150, 4 October 2005 (2005-10-04), pages 261-271, XP027756576, ISSN: 0378-7753 [retrieved on 2005-10-04]
- KANNAN A M ET AL: "RECHARGEABLE IRON/AIR CELLS EMPLOYING BIFUNCTIONAL OXYGEN ELECTRODES OF OXIDE PYROCHLORES", JOURNAL OF POWER SOURCES, ELSEVIER SA, CH, vol. 35, no. 2, 1 July 1991 (1991-07-01), pages 113-121, XP000233205, ISSN: 0378-7753, DOI: 10.1016/0378-7753(91)80028-V

## Beschreibung

Die Erfindung betrifft ein Energiespeichermaterial zur Verwendung in einer wiederaufladbaren Energiespeichereinheit, welches aus in ein matrixbildendes Trägermaterial eingebrachten Metallpartikeln aus wenigstens einem, insbesondere im Ladebetrieb einer Energiespeichereinheit, reduzierbaren und, insbesondere im Entladebetrieb einer Energiespeichereinheit, oxidierbaren Metall gebildet ist. Daneben betrifft die Erfindung eine wiederaufladbare Energiespeichereinheit.

Wiederaufladbare Energiespeichereinheiten arbeiten im Wesentlichen auf dem Prinzip elektrochemischer Zellen, das heißt der redoxbasierten Umsetzung von chemischer in elektrischer Energie oder umgekehrt. Dabei werden üblicherweise an einer positiv geladenen Elektrode Oxidationsmittel, beispielsweise Sauerstoffionen aus Luftsauerstoff gebildet und durch einen zwischen der positiven und einer negativen Elektrode angeordneten und für das Oxidationsmittel, das heißt z. B. die gebildeten Sauerstoffionen, entsprechend durchlässigen Elektrolyten der negativen Elektrode zugeführt.

Bei wiederaufladbaren Energiespeichereinheiten ist das zu oxidierende Material, das heißt das Reduktionsmittel üblicherweise mittel- oder unmittelbarer Bestandteil der Energiespeichereinheit. Das Reduktionsmittel liegt regelmäßig in Form von als Energiespeichermaterial dienenden Metallpartikeln vor und ist einer Elektrode zugeordnet. Die Metallpartikel sind im Entladebetrieb der Energiespeichereinheit oxidierbar und im Ladebetrieb der Energiespeichereinheit entsprechend reduzierbar.

Die nähere Funktionsweise entsprechender wiederaufladbarer Energiespeichereinheiten ist hinlänglich bekannt.

Die für den Betrieb einer entsprechenden wiederaufladbaren Energiespeichereinheit sonach erforderlichen Metallpartikel werden im Rahmen der Herstellung der wiederaufladbaren Energiespeichereinheit üblicherweise in Form von Pulverschüttungen in entsprechende Aufnahmeräumen der ersten Elektrode eingebracht bzw. eingefüllt, wobei die Handhabung der Metallpartikel respektive der mit diesen befüllten Elektrode im Hinblick auf den weiteren Zusammenbau der stapelartig aufgebauten Energiespeichereinheit äußerst kompliziert ist. Ferner können sich beim Anfahren der Energiespeichereinheit Probleme durch Druckstöße ergeben, wodurch die pulverförmigen Metallpartikel aus den hierfür vorgesehenen Aufnahmeräumen gelöst werden können.

Ein Vorschlag zur Lösung dieses Problems besteht in einer Vorsinterung bzw. einem Verpressen der Metallpartikel, insbesondere stäbchenförmigen, Presslingen. Diese weisen jedoch Nachteile bezüglich der für den Betrieb der Energiespeichereinheit erforderlichen Porosität auf. Zusätzlich gestaltet sich deren Herstellung ebenso schwierig bzw. aufwändig.

Aus der Druckschrift US 2002/0160247 A1 ist eine Metall-Luft-Zelle bekannt. Eine Anode ist zweiteilig ausgebildet, wobei eine jeweilige Seite der Anode komplementär zu einer Seite der Kathode ist. Zwischen der Anode und der Kathode ist ein Separator eingebracht. Die Anode umfasst Metallpartikel, die der Zelle zugeführt werden und während einer Entladung der Zelle verbraucht werden.

Eine wiederaufladbare Elektrode für Batterien und Metall-Luft-Zellen ist aus der Druckschrift US 3,819,413 A1 bekannt. An der Elektrode sind im Wesentlichen senkrecht zur Elektrodenoberfläche stehende Fasern angeordnet, an denen das aktive Elektrodenmaterial angeordnet ist.

Aus dem Artikel Hang B. T. et al.: "The electrochemical properties of Fe2O3-loaded carbon electrodes for iron-air battery anodes", JOURNAL OF POWER SOURCES, ELSEVIER SA, CH, Bd. 150, 4. Oktober 2005 (2005-10-04), Seiten 261 - 271, XP027756576 ist es bekannt, Eisenoxide an der Oberfläche von Kohlenstoffmaterialien anzulagern. Zur Herstellung der Elektrodenschicht kann PTFE zu den mit Eisenoxid beladenen Kohlenstoffmaterialien beigesetzt werden. Die derart beschichteten Kohlenstoffmaterialien werden zu einer Tablette gepresst, die als Elektrode genutzt werden kann.

Eine Eisen-/Luftzelle mit einer gepressten Eisenelektrode ist aus dem Artikel Kannan A. M. et al.: "Rechargeable iron/air cells employing bifunctional oxygen electrodes of oxide pyrochlores", JOURNAL OF POWER SOURCES, ELSEVIER SA, CH, Bd. 35, Nr. 2, 1. Juli 1991 (1991-07-01), Seiten 113-121, XP000233205 bekannt. Zur Herstellung der Elektrode werden Nickelgitter gereinigt und anschließend eine Mischung aus aktivem Material, Polyethylen, Graphit und Eisensulfid durch Heißpressen in die Gitter eingefügt.

Der Erfindung liegt damit das Problem zugrunde, eine, insbesondere im Hinblick auf ihre Herstellbarkeit, verbesserte wiederaufladbare Energiespeichereinheit anzugeben.

Das Problem wird erfindungsgemäß durch ein Energiespeichermaterial der vorgenannten Art gelöst, welches sich dadurch auszeichnet, dass das Trägermaterial als anorganischer Binder ausgebildet ist.

Das erfindungsgemäße Prinzip sieht vor, die Metallpartikel in ein matrixbildendes Trägermaterial einzubringen, so dass die Verwendung loser Pulverschüttungen oder dergleichen beim Zusammenbau der Energiespeichereinheit, das heißt insbesondere bei der Verbindung der entsprechenden Elektrode mit den Metallpartikeln, nicht mehr notwendig ist. Das Trägermaterial ist demnach als Matrix mit darin vorzugsweise gut dispergierten Metallpartikeln zu sehen, wobei der Füllgrad an den für den Betrieb der Energiespeichereinheit erforderlichen Metallpartikel beispielsweise zwischen 60 und 80 Gew.-% liegt, wobei Abweichungen nach oben bzw. unten selbstverständlich denkbar sind. Grundsätzlich kann es sein, dass das Trägermaterial im Rahmen der Verwendung der Energiespeichereinheit, insbesondere aufgrund der im Betrieb der Energiespeichereinheit herrschenden Temperaturen (> 700°C) entfernt, das heißt insbesondere aufgebrannt wird. Insofern ist darauf zu achten, dass der Anteil des Trägermaterials an dem Energiespeichermaterial möglichst gering gehalten wird, so dass ein entsprechendes Ausgasen keine die Energiespeichereinheit schädigende Effekte bewirkt.

Das matrixbildende Trägermaterial ist insbesondere aus- oder anhärtbar, so dass es durch physikalische bzw. chemische Prozesse, das heißt beispielsweise durch Ausdampfen eines Lösungsmittels oder eine Vernetzung härtbar bzw. in eine feste Form überführbar ist und entsprechend einen festen, das heißt gut handhabbaren bzw. weiter verarbeitbaren Körper bildet. Hieraus ergibt sich im Weiteren auch, dass das Trägermaterial auf einfache Art und Weise, das heißt beispielsweise durch Stanzen, Ausschneiden oder dergleichen in eine Vielzahl an unterschiedlichen Geometrien gebracht werden kann.

Das Trägermaterial ist erfindungsgemäß als anorganischer Binder ausgebildet. Binder, wie beispielsweise auf Basis von Keramiken oder Kunststoffen, stellen eine Matrix, in welche die Metallpartikel im Sinne eines dispersen Systems eingebettet werden, dar. In dem Binder können zudem aushärtbare Stoffe enthalten sein, welche beispielsweise durch den Einfluss von Temperatur oder energiereicher Strahlung eine Härtung des Binders erlauben, so dass die Energiespeichereinheit derart die oben genannten Festkörper-Eigenschaften erlangen kann.

Besonders bevorzugt beinhaltet das Trägermaterial wenigstens einen Klebstoff. Mithin handelt es sich bei dieser Ausführungsform der Erfindung um ein selbst klebfähiges Trägermaterial und in der Folge um ein klebfähiges Energiespeichermaterial, welches sich auf besonders stabile Weise an der entsprechenden Elektrode der Energiespeichereinheit anbringen lässt, so dass es fest mit dieser verbunden bzw. fixiert vorliegt. Als Klebstoff kommt vorteilhafterweise ein Dispersionsklebstoff in Frage. Selbstverständlich ist die Verwendung anderer Klebstoffe grundsätzlich ebenso denkbar.

Das Trägermaterial kann wenigstens ein Dispergiermittel, insbesondere zur Dispergierung der Metallpartikel, beinhalten. Entsprechend ist eine hinreichende Dispergierung insbesondere der Metallpartikel innerhalb des matrixbildenden Trägermaterials sichergestellt, so dass unerwünschte Agglomerationen der Metallpartikel verhindert werden. Gleichermaßen sorgt das Dispergiermittel vorteilhaft auch für eine gute Dispergierung sämtlicher anderer in dem Trägermaterial vorhandener Feststoffpartikel.

Es ist zweckmäßig, wenn das Energiespeichermaterial auf eine klebfähige, insbesondere doppelseitig klebfähige, Folie aufgebracht ist. Die klebfähige Folie ist als Transfermaterial zu verstehen und dient insbesondere der Handhabung des Energiespeichermaterials. Es ist bei Verwendung einer doppelseitig klebfähigen Folie beispielsweise denkbar, dass diese auf ihrer Oberseite ein Anhaften des Energiespeichermaterials erlaubt und mit ihrer Unterseite samt dem oberseitig angebrachten Energiespeichermaterial in einem Aufnahmeraum einer Elektrode anordbar bzw. fixierbar ist. Mithin ergibt sich eine besonders stabile Anordnung des Energiespeichermaterials, das heißt der Metallpartikel in dem Trägermaterial, innerhalb der hierfür vorgesehenen Aufnahmeräume der Elektrode. Das Aufbringen des Energiespeichermaterials auf die klebfähige Folie kann beispielsweise über Rakeln oder Gießen, das heißt insbesondere Foliengießen erfolgen, wobei hierbei eine besonders homogene bzw. gezielte Einstellung einer Schichtdicke des Energiespeichermaterials realisierbar ist.

Das Metall kann beispielsweise Eisen und/oder eine Eisenoxidverbindung wie z. B. Eisen(III)Oxid (Fe₂O₃) sein. Gegebenenfalls kann das Eisen respektive die Eisenverbindung Legierungselemente wie Mangan (Mn), Molybdän (Mo), Kupfer (Cu) oder keramische Partikel enthalten. Wenngleich neben Eisen bzw. Eisenverbindungen auch die Verbindungen anderer entsprechend redoxaktiver Metalle denkbar ist, bieten sich Eisen bzw. Eisenverbindungen besonders im Hinblick auf deren günstige redoxaktive Eigenschaften zur Verwendung in einem bzw. als ein Energiespeichermaterial einer wiederaufladbaren Energiespeichereinheit an. Gleichermaßen bietet die Verwendung von Eisen bzw. Eisenverbindungen im Vergleich zu anderen Metallen Kostenvorteile.

Das Energiespeichermaterial weist beispielsweise eine Dicke von 0,1 mm bis 5 mm, bevorzugt von 0,5 bis 2 mm, besonders bevorzugt von 1 mm, auf. Selbstverständlich sind in Ausnahmefällen auch andere Dicken des Energiespeichermaterials möglich. Grundsätzlich ist das erfindungsgemäße Energiespeichermaterial mit einer besonders homogenen Oberfläche und entsprechend einer definierten Schichtdicke herstellbar.

Daneben betrifft die vorliegende Erfindung eine wiederaufladbare Energiespeichereinheit, mit einer ersten und einer zweiten Elektrode, wobei der ersten Elektrode ein erfindungsgemäßes Energiespeichermaterial zugeordnet ist, wobei das die Metallpartikel bildende Metall im Ladebetrieb der Energiespeichereinheit reduzierbar und im Entladebetrieb der Energiespeichereinheit oxidierbar ist.

Das Energiespeichermaterial kann besonders einfach zu handhaben bzw. in beliebig unterschiedliche Formen zu bringen sein.

Das Trägermaterial ist als anorganischer Binder ausgebildet. Mithin bildet der Binder eine die Metallpartikel aufnehmende Matrix. Der Binder kann etwa auf Keramik oder Kunststoff basieren.

Das Energiespeichermaterial kann vorteilhaft wenigstens einen Klebstoff, wie insbesondere einen Dispersionsklebstoff, beinhalten. Derart ist das Energiespeichermaterial selbst klebfähig und besonders gut in einem Aufnahmeraum einer Elektrode einer Energiespeichereinheit fixierbar.

Das Trägermaterial kann in Weiterbildung der Erfindung wenigstens ein Dispergiermittel, insbesondere zur Dispergierung der Metallpartikel, beinhalten. Entsprechend sind unerwünschte Agglomerationen der Metallpartikel respektive gegebenenfalls weiterer, in dem matrixbildenden Trägermaterial vorhandener Partikel unterbunden.

Es ist zudem denkbar, dass das Energiespeichermaterial auf eine klebfähige, insbesondere doppelseitig klebfähige, Folie aufgebracht ist. Die Folie ist als Transfermaterial zu sehen, und dient mit ihrer Oberseite bevorzugt der Aufnahme des Energiespeichermaterials und mit ihrer Unterseite der Anbringung in einem entsprechenden Aufnahmeraum einer Elektrode, so dass das Energiespeichermaterial über die Folie innerhalb des Aufnahmeraums fixierbar ist. Dies ist insbesondere von Vorteil, wenn das Energiespeichermaterial an sich nicht klebfähig ist.

Das Metall ist vorteilhaft Eisen und/oder eine Eisenoxidverbindung sein. Selbstverständlich sind in Ausnahmefällen auch andere, insbesondere redoxaktive Metalle denkbar. Auch das Zulegieren von metallischen Elementen wie beispielsweise Mangan (Mn), Molybdän (Mo), oder Kupfer (Cu) sowie keramischer Partikel ist möglich.

Das Energiespeichermaterial weist vorteilhaft eine Dicke von 0,1 mm bis 5 mm, bevorzugt von 0,5 bis 2 mm, besonders bevorzugt von 1 mm, auf. Gegebenenfalls sind selbstverständlich Abweichungen nach oben bzw. unten möglich.

Die vorweg bereits genannten Aufnahmeräume der ersten Elektrode sind bevorzugt kanalartig bzw. kanalförmig ausgebildet. Entsprechend liegt das Energiespeichermaterial bevorzugt in diesen entsprechenden Bahnen vor. Selbstverständlich sind neben kanalartigen Aufnahmeräumen auch beliebig andersartig geformte Aufnahmeräume denkbar, wobei die Form des Energiespeichermaterials vorteilhaft der Geometrie der Aufnahmeräume nachempfunden ist, was, wie oben erwähnt, aufgrund der einfachen Konfektionierbarkeit des Energiespeichermaterials problemlos möglich ist.

Das erfindungsgemäße Energiespeichermaterial wird vorteilhaft gemäß einem Verfahren hergestellt, welches sich durch die im Folgenden beschriebenen Schritte auszeichnet. Zunächst werden Metallpartikel aus wenigstens einem redoxaktiven Metall bereitgestellt und in ein matrixbildendes Trägermaterial, d.h. einen Binder eingebracht. Hierbei können die Metallpartikel vor Einbringen in das Bindemittel in destilliertem Wasser über ein Dispergiermittel dispergiert werden. Nach dem Einbringen der Metallpartikel in das matrixbildende Trägermaterial erfolgt ein Mischvorgang zur Dispergierung der Metallpartikel in dem Trägermaterial.

Das derart hergestellte Energiespeichermaterial kann beispielsweise durch Rakeln, Foliengießen oder Siebdruck auf eine klebfähige Folie aufgebracht werden und dort beispielsweise über Trocknen aushärten, so dass es einen festen Körper bildet.

Im Weiteren ist das derart hergestellte Energiespeichermaterial in beliebige Formen konfektionierbar, wobei insbesondere Stanz- oder Schneideverfahren geeignet sind, das Energiespeichermaterial in entsprechenden Geometrien auszubilden.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer wiederaufladbaren Energiespeichereinheit gemäß einer beispielhaften Ausführungsform der Erfindung in einer Explosionsansicht;
- Fig. 2: eine Prinzipdarstellung des erfindungsgemäßen Energiespeichermaterials in einer Schnittansicht;
- Fig. 3: eine Prinzipdarstellung einer Elektrode gemäß einer beispielhaften Ausführungsform der Erfindung in einer Draufsicht; und
- Fig. 4: eine Schnittansicht durch die Anodenplatte gemäß Fig. 3 entlang der Linie IV - IV.

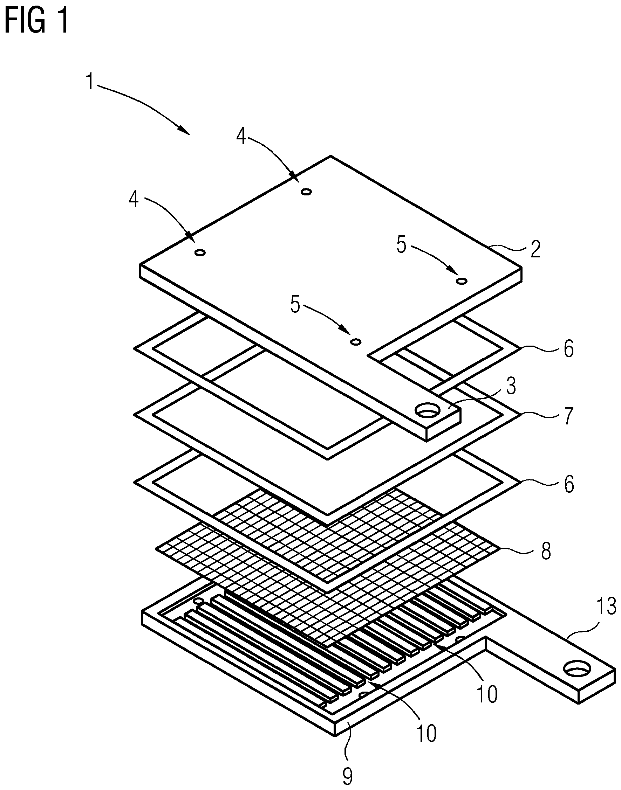

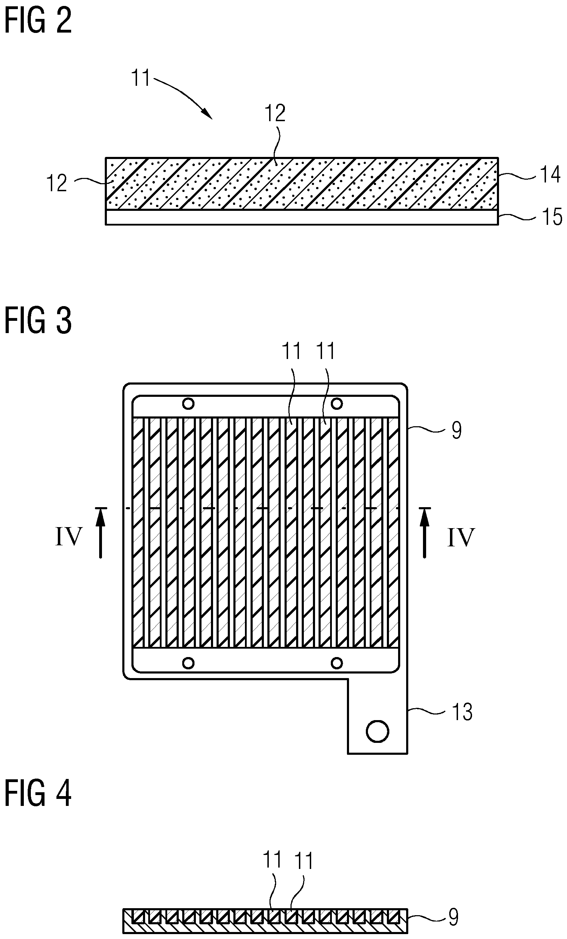

Fig. 1 zeigt eine Prinzipdarstellung einer wiederaufladbaren Energiespeichereinheit 1 gemäß einer beispielhaften Ausführungsform der Erfindung in einer Explosionsansicht. Ersichtlich weist die Energiespeichereinheit 1 einen stapelartigen Aufbau (sogenannten Stack-Aufbau) auf und umfasst bei Betrachtung von oben nach unten eine Elektrode 2 in Form einer Kathoden-Basisplatte mit einem daran ausgebildeten elektrischen Anschlussstück 3 zur elektrischen Kontaktierung der Elektrode 2. Die Elektrode 2 kann über die an dieser vorgesehenen Einlässe 4 und Auslässe 5 kontinuierlich mit einem Gas wie z. B. Formiergas gespült werden. An die Elektrode 2 schließt sich ein zu Dichtzwecken vorgesehenes Rahmenteil 6, welches beispielsweise aus Glas gefertigt sein kann, an. Darunter liegend befindet sich eine flächige, insbesondere als Festkörper-Elektrolyt ausgebildete Membran-Elektroden-Einheit 7, welcher wiederum ein zu Dichtzwecken vorgesehenes Rahmenteil 6 folgt. Die nächste Lage bildet ein Nickel-Netz 8. Das Nickel-Netz 8 dient der elektrischen Kontaktierung der darunter angeordneten Elektrode 9 in Form einer Anoden-Basisplatte, welcher, wie im Weiteren erläutert wird, in dafür vorgesehenen kanalartigen Aufnahmeräumen 10 ein Energiespeichermaterial 11 (vgl. Fig. 2) in Form von Metallpartikeln 12 aus wenigstens einem im Ladebetrieb der Energiespeichereinheit 1 reduzierbaren und im Entladebetrieb der Energiespeichereinheit 1 oxidierbaren Metall zugeordnet ist. Die Elektrode 9 weist analog zur Elektrode 2 ein elektrisches Anschlussstück 13 auf.

Die Funktionsweise der erfindungsgemäßen wiederaufladbaren Energiespeichereinheit 1 ist im Wesentlichen bekannt und beruht bezogen auf deren Entladebetrieb darauf, dass an der schematisch gezeigten negativ geladenen, d.h. als Kathode geschalteten Elektrode 2 z. B. über Gasspülung kontinuierlich zugeführter Luftsauerstoff zu Sauerstoffführenden reduziert wird. Die gebildeten Sauerstoffionen diffundieren durch die Membran-Elektroden-Einheit 7 sowie das Nickel-Netz 8 in die hier als Anode dienende, das heißt positiv geladene Elektrode 9. Die Membran-Elektroden-Einheit 7 ist für Elektronen undurchlässig, so dass elektrische Kurzschlüsse der Energiespeichereinheit 1, das heißt insbesondere zwischen den Elektroden 2, 9 verhindert werden.

Die durch den Elektrolyten sowie das Nickel-Gitter 8 diffundierten Sauerstoffionen oxidieren das in den Aufnahmeräumen 10 befindliche Energiespeichermaterial 11 respektive die Metallpartikel 12 zu Metalloxiden. Die Metallpartikel 12 können dabei beispielsweise als Eisen- oder Eisenoxidpartikel mit einer Partikelgröße von beispielsweise ca. 1 bis 50 µm vorliegen. Gleiches gilt für den Fall, in dem das Energiespeichermaterial 11 nicht aus reinen Metallpartikeln 12, sondern aus Metalloxiden wie etwa Eisen(III)oxid (Fe₂O₃) besteht.

Die erfindungsgemäße wiederaufladbare Energiespeichereinheit 1 lässt sich besonders leicht zusammenbauen, da insbesondere das in die Aufnahmeräume 10 der Elektrode 9 einzubringende Energiespeichermaterial 11 nicht als lose Pulverschüttung, sondern als fester, vorkonfektionierbarer bzw. vorkonfektionierter Körper vorliegt. Dies wird erfindungsgemäß dadurch erreicht, dass die Metallpartikel 12 in ein matrixbildendes Trägermaterial 14 eingebracht sind, wie mit Bezug auf Fig. 2 näher erklärt wird. Dabei ist es möglich, dass das Trägermaterial 14 im Rahmen des Betriebs der Energiespeichereinheit 1 ausbrennt, d.h. entfernt wird, so dass ausschließlich die Metallpartikel 12 in den entsprechenden Aufnahmeräumen 10 verbleiben.

Fig. 2 zeigt eine Prinzipdarstellung des erfindungsgemäßen Energiespeichermaterials 11 in einer Schnittansicht. Ersichtlich liegt das Energiespeichermaterial 11 als disperses System vor, das heißt die Metallpartikel 12 sind in dem matrixbildenden Trägermaterial 14 eingebettet. Das matrixbildende Trägermaterial 14 könnte in einer nicht erfindungsgemäßen Alternative ein organischer Binder wie etwa ein Kunststoffharz sein. Derart ist es möglich, dass das Trägermaterial 14 samt der darin eingebetteten Metallpartikel 12 als flächiger Körper mit definierter Schichtdicke von beispielsweise ca. 1 mm ausgebildet werden kann, welcher im Weiteren in eine beliebigen Anzahl an Geometrien konfektionierbar und insbesondere, beispielsweise über Stanz- oder Schneidprozesse, exakt an die Geometrie der Aufnahmeräume 10 der Elektrode 9 anpassbar und im Weiteren passgenau in diese einbringbar ist (vgl. Fig. 3, 4).

Vorteilhaft enthält das Trägermaterial 14 zudem eine gute Dispergierung der Metallpartikel 12 in der durch das Trägermaterial 14 gebildeten Bindermatrix sicherstellende Dispergiermittel (nicht gezeigt).

Gemäß Fig. 2 ist das Energiespeichermaterial 11 auf eine doppelseitig klebfähige Folie 15 aufgebracht, wobei die klebfähige Oberseite der Folie 15 ein sicheres Anhaften des Energiespeichermaterials 11 auf der Folie 15 und die Unterseite ein sicheres Anhaften der Folie 15 samt dem darauf oberseitig aufgebrachten Energiespeichermaterial 11 in einem der Aufnahmeräume 10 der Elektrode 9 gewährleistet. Mithin kann das derart vorbereitete, auf die Folie 15 aufgebrachte Energiespeichermaterial 11 sicher, das heißt im Wesentlichen unverlierbar in den Aufnahmeräumen 10 der Elektrode 9 fixiert werden, so dass die Gefahr eines Verrückens oder Entfernens aus den Aufnahmeräumen 10, bedingt durch gegebenenfalls während des Zusammenbaus der Energiespeichereinheit 1 auftretende Bewegungen nicht möglich ist. Das Aufbringen des Energiespeichermaterials 11 auf die Folie 15 erfolgt bevorzugt über Rakeln oder Foliengießen, da derart eine Einstellung einer homogenen Schichtdicke des Energiespeichermaterials 11 möglich ist.

Es ist ebenso denkbar, dass das Trägermaterial 14 einen Klebstoff (nicht gezeigt) enthält, so dass das Energiespeichermaterial 11 selbst klebfähig ist und auch ohne Folie 15 klebend in den Aufnahmeräumen 10 der Elektrode 9 fixierbar ist. Als Klebstoff kommt bevorzugt ein Dispersionsklebstoff zur Verwendung. Selbstverständlich kann auch in dem Fall eines einen Klebstoff beinhaltenden Trägermaterials 14 das Energiespeichermaterial 11 auf eine klebfähige Folie 15 aufgebracht sein.

Anhand der Figuren 3 und 4 lässt sich erkennen, dass das Energiespeichermaterial 11 passgenau in die kanalartig ausgebildeten Aufnahmeräume 10 der plattenartigen Elektrode 9 eingebracht werden kann. Das Energiespeichermaterial 11 ist der Form der kanalartigen Aufnahmeräume 10 nachempfunden und liegt als einzelne bahnartiger bzw. streifenartiger Körper vor. Die Ausführungsformen gemäß den Figuren 3 und 4 betreffen ein Energiespeichermaterial 11 mit darin enthaltenen Klebstoffen, das heißt, das Energiespeichermaterial 11 ist selbst klebfähig und deshalb passend in den Aufnahmeräumen 10 fixierbar. Sämtliche beim Zusammenbau der Energiespeichereinheit 1 möglicherweise auftretenden Bewegungen der Elektrode 9 führen insofern nicht zu einem Verrücken bzw. Entfernen des Energiespeichermaterials 11 aus den Aufnahmeräumen 10.

## Patentansprüche

1. Energiespeichermaterial zur Verwendung in einer wiederaufladbaren Energiespeichereinheit, welches aus in ein matrixbildendes Trägermaterial (14) eingebrachten Metallpartikeln aus wenigstens einem, insbesondere im Ladebetrieb einer Energiespeichereinheit, reduzierbaren und, insbesondere im Entladebetrieb einer Energiespeichereinheit, oxidierbaren Metall gebildet ist, **dadurch gekennzeichnet, dass** das Trägermaterial (14) als anorganischer Binder ausgebildet ist.

2. Energiespeichermaterial nach Anspruch 1, **dadurch gekennzeichnet, dass** es eine Dicke von 0,1 mm bis 5 mm, bevorzugt von 0,5 bis 2 mm, besonders bevorzugt von 1 mm, aufweist.

3. Wiederaufladbare Energiespeichereinheit, mit einer ersten und einer zweiten Elektrode, **dadurch gekennzeichnet, dass** der ersten Elektrode ein Energiespeichermaterial gemäß Anspruch 1 oder 2 zugeordnet ist, wobei das die Metallpartikel bildende Metall im Ladebetrieb der Energiespeichereinheit reduzierbar und im Entladebetrieb der Energiespeichereinheit oxidierbar ist.

## Claims

1. Energy storage material for use in a rechargeable energy storage unit, which material is formed from metal particles, incorporated into a matrix-forming carrier material (14), made from at least one metal which is reducible, in particular during charging operation of an energy storage unit, and is oxidisable, in particular during discharging operation of an energy storage unit, **characterised in that** the carrier material (14) is embodied as an inorganic binder.

2. Energy storage unit according to claim 1, **characterised in that** it has a thickness of 0.1 mm to 5 mm, preferably of 0.5 to 2 mm, particularly preferably of 1 mm.

3. Rechargeable energy storage unit, having a first and a second electrode, **characterised in that** the first electrode is assigned an energy storage material according to claim 1 or 2, wherein the metal forming the metal particles is reducible during charging operation of the energy storage unit and is oxidisable during discharging operation of the energy storage unit.

## Revendications

1. Matériau d'accumulateur d'énergie à utiliser dans une unité d'accumulation d'énergie rechargeable, qui est constitué de particules métalliques, introduites dans un matériau (14) support formant une matrice, en au moins un métal réductible, notamment en fonctionnement de charge d'une unité d'accumulation d'énergie, et, notamment en fonctionnement de décharge d'une unité d'accumulation d'énergie, oxydable, **caractérisé en ce que** le matériau (14) support est constitué sous la forme d'un liant minéral.

2. Matériau d'accumulateur d'énergie suivant la revendication 1, **caractérisé en ce qu'**il a une épaisseur de 0,1 mm à 5 mm, de préférence de 0,5 à 2 mm, d'une manière tout à fait préférée de 1 mm.

3. Unité d'accumulation d'énergie rechargeable, comprenant une première et une deuxième électrodes, **caractérisée en ce que**, à la première électrode, est associé un matériau accumulateur d'énergie suivant la revendication 1 ou 2, le métal formant les particules métalliques étant réductible en fonctionnement de charge de l'unité d'accumulation d'énergie et étant oxydable en fonctionnement de décharge de l'unité d'accumulation d'énergie.
